# EUROPÄISCHE PATENTSCHRIFT

(11) **EP 3 008 366 B1**
(45) Veröffentlichungstag und Bekanntmachung des Hinweises auf die Patenterteilung: **07.08.2019**
(21) Anmeldenummer: 14731169.0
(22) Anmeldetag: 03.06.2014
(51) Int. Cl.: F16K 31/06, F16F 9/46, F16K 1/54

(54) **ELEKTROMAGNETISCHES VENTIL ZUR DURCHFLUSSSTEUERUNG EINES DRUCKMEDIUMS**
ELECTROMAGNETIC VALVE FOR CONTROLLING THE FLOW OF A PRESSURE MEDIUM
ÉLECTROVANNE DE RÉGLAGE DE DÉBIT D'UN FLUIDE SOUS PRESSION

(30) Priorität: 13.06.2013 DE 102013211014
(43) Veröffentlichungstag der Anmeldung: 20.04.2016
(73) Patentinhaber: Kendrion (Villingen) GmbH, 78048 Villingen-Schwenningen (DE)
(72) Erfinder: FLÜHS, Joachim, 78050 Villingen-Schwenningen (DE); BRANDENBURG, Holger, 78048 Villingen-Schwenningen (DE)
(74) Vertreter: Westphal, Mussgnug & Partner Patentanwälte mbB
(86) Internationale Anmeldenummer: PCT/EP2014/061481
(87) Internationale Veröffentlichungsnummer: WO 2014/198587

(56) Entgegenhaltungen:
- EP-A1- 0 561 404
- EP-A1- 1 657 431
- DE-A1-102007 005 466
- DE-B3-102013 100 717
- US-A- 4 896 860

## Beschreibung

Die Erfindung betrifft ein elektromagnetisches Ventil zur Durchflusssteuerung eines Druckmediums gemäß Oberbegriff des Patentanspruchs 1.

Es sind aktiv verstellbare Dämpfersysteme für Fahrzeuge bekannt, die in der Regel nach dem Prinzip eines variablen Öffnungsquerschnitts arbeiten. Solche Dämpfer stellen die entsprechenden Stoßdämpferkennwerte über hydraulische Proportionalventile ein und können an unterschiedliche Fahrsituationen, beispielsweise hinsichtlich der Fahrbahnoberfläche oder an unterschiedliche Kundenwünsche angepasst werden. Die Proportionalventile steuern mit Hilfe eines beweglichen Schiebers, der von einer Magnetspule bewegt wird, kontinuierlich den Fluiddurchfluss im Dämpfer. Je nach Bestromung des elektromagnetischen Proportionalventils wird dessen öldurchflossener Querschnitt verändert.

Aus der EP 1 657 431 A1 ist ein gattungsbildendes elektromagnetisches Ventil als Schieberventil bekannt, bei dem der in einem Schieberkanal eines Ventilkörpers verschiebbar angeordnete Ventilschieber aus einem hohlzylindrischen Schieberabschnitt, der die Schieberfunktion übernimmt, und einem daran sich anschließenden, in magnetischer Wirkverbindung mit einem Polkern stehenden Ankerabschnitt besteht.

Gemäß dieser EP 1 657 431 A1 befinden sich im Bereich des hohlzylindrischen Schieberabschnittes radiale Blendenöffnungen, die in Abhängigkeit der Stellung des Ventilschiebers in dem Schieberkanal radiale Durchtrittsöffnungen des Ventilkörpers freigeben oder verschließen, so dass ein Ventildurchfluss über eine schieberkanalseitige Fluid-Einlassöffnung in den Hohlraum des hohlzylindrischen Schieberabschnittes und über dessen Blendenöffnungen in den als Fluid-Auslassöffnung ausgebildeten Durchtrittsöffnungen zustande kommt oder gesperrt wird. Eine Druckfeder mit linearer Kennlinie zwischen dem Polkern und dem Ventilschieber spannt diesen im unbestromten Zustand der Magnetspule in eine die Durchtrittsöffnung verschließende Grundstellung vor.

Weitere elektromagnetische Ventile sind aus der DE 10 2007 005 466 A1, der US 4 896 860, der EP 0 561 404 A1, der EP 1 657 431 A1 und der DE 10 2013 100 717 B3 bekannt.

Neben kontinuierlich verstellbaren Dämpfersystemen sind auch Dämpfersysteme bekannt, deren Dämpfercharakteristik in diskreten Stufen einstellbar ist. Solche Dämpfersysteme lassen sich jedoch mit bisher bekannten elektromagnetischen Schieberventilen nur mit unzureichenden Eigenschaften realisieren. Es hat sich gezeigt, dass bei Verwendung einer Schraubenfeder mit einer linearer Kennlinie durch Bestromung der Magnetspule mit einer mittleren Stromstärke es nicht möglich ist, den Ventilschieber in eine Mittelstellung zwischen den die Durchtrittsöffnungen verschließenden oder freigegebenen Grundeinstellungen zu steuern und diese Mittelstellung beizubehalten.

Der Erfindung liegt daher die Aufgabe zu Grunde, ein elektromagnetisches Ventil zur Durchflusssteuerung eines Druckmediums anzugeben, welches zur diskreten Einstellung der Dämpfercharakteristik eines Dämpfersystems, insbesondere eines Stoßdämpfer eines Fahrzeugs geeignet ist.

Diese Aufgabe wird gelöst durch ein elektromagnetisches Ventil mit den Merkmalen des Patentanspruchs 1.

Ein solches elektromagnetisches Ventil zur Durchflusssteuerung eines Druckmediums, umfasst erfindungsgemäß
- ein Ventilgehäuse mit einer Zulauföffnung und einer Ablauföffnung für das Druckmedium,
- mindestens eine die Zulauföffnung mit der Ablauföffnung verbindende Durchtrittsöffnung für das Druckmedium,
- einen Ventilschieber, welcher mittels einer Magnetspule zwischen einer die Durchtrittsöffnung verschließenden ersten Grundstellung und einer die Durchtrittsöffnung öffnenden zweiten Grundstellung axial verschiebbar ist,
- ein mit dem Ventilschieber in magnetische Wechselwirkung tretender Polkern mit einem Ankerraum,
   und
- eine Federanordnung, welche bei unbestromter Magnetspule den Ventilschieber in der ersten oder der zweiten Grundstellung positioniert, wobei
- die Federanordnung einen ersten Federabschnitt und einen mit diesem seriell verbundenen zweiten Federabschnitt umfasst, wobei der zweite Federabschnitt eine kleinere Federkonstante als der erste Federabschnitt aufweist,
- ein Federwegbegrenzungsmittel vorgesehen ist, welches zur Positionierung des Ventilschiebers in einer Zwischenstellung zwischen der ersten und zweiten Grundstellung mittels der bestromten Magnetspule einen vorgegebenen Federweg des zweiten Federabschnittes durch Anlage an den Polkern begrenzt,
- der Ventilschieber als Anker mit einem hohlzylindrischen Schieberabschnitt ausgebildet ist, wobei der Schieberabschnitt wenigstens eine radiale Blendenöffnung aufweist, und
- der Ventilschieber ausgebildet ist, in der Zwischenstellung wenigstens einen Teilquerschnitt der Durchtrittsöffnung freizugeben, wobei sich in der Zwischenstellung des Ventilschiebers die Durchtrittsöffnung wenigstens teilweise mit der Blendenöffnung überdeckt.

Die Verwendung einer Reihenschaltung aus einer harten Feder (erster Federabschnitt) und einer weichen Feder (zweiter Federabschnitt) führt zu einer Federkennlinie der Federanordnung mit einem flachen Kennlinienbereich und einem steilen Kennlinienbereich. Dadurch dass der zweite Federabschnitt (weiche Feder) mittels des Federwegbegrenzungsmittels in seinem Federweg begrenzt ist, entsteht eine geknickte Federkennlinie der Federanordnung, so dass im Knickpunkt der Federkennlinie die weiche Feder geblockt wird. Die zugehörige Magnetkraftkennlinie verläuft im Wesentlichen waagerecht, so dass sich mit der Federkennlinie ein stabiler Schnittpunkt und damit eine stabile Zwischenlage des Ventilschiebers einstellen lassen. Ferner wirken sich durch den steilen Anstieg des von dem ersten Federabschnitt (harte Feder) bewirkten Federkennlinienbereiches Schwankungen in der Höhe der Magnetkraft nur gering auf die Zwischenstellung aus.

Durch die Ausbildung des Ventilschiebers als Anker mit einem hohlzylindrischen Schieberabschnitt ergibt sich ein konstruktiv einfacher Aufbau. Dabei weist vorzugsweise der Ventilschieber einen zum hohlzylindrischen Schieberabschnitt endseitig gegenüberliegenden Ankerabschnitt auf.

Des weiteren sieht eine vorteilhafte Ausgestaltung der Erfindung vor, dass
- die Federanordnung zwischen dem Polkern und dem Ventilschieber angeordnet ist, und
- der Ventilschieber in entgegengesetzte Richtung der magnetischen Wechselwirkungskraft von der Federanordnung vorgespannt ist.

Damit ergibt sich eine bauraumsparende Anordnung der Federanordnung zwischen dem Polkern und dem Ventilschieber, wobei durch entsprechende Gestaltung der Geometrie des Polkerns auch der Verlauf der Magnetfeldkennlinie im Sinne einer stabilen Zwischenstellung beeinflusst werden kann.

Ferner ist weiterbildungsgemäß vorgesehen, dass der Ankerabschnitt einen zylindrischen Hohlraum zur wenigstens teilweisen Aufnahme des ersten Federabschnittes aufweist, welcher an dessen radiale Kontur angepasst ist, wobei sich ein Ende des ersten Federabschnittes gegen die Grundfläche des zylindrischen Hohlraums des Ankerabschnittes abstützt. Durch die teilweise Anordnung des ersten Federabschnittes im Bereich des Ventilschiebers wird ein bauraumsparender Aufbau des Ventils erreicht.

Vorzugsweise ist der Polkern mit einer Sacklochbohrung ausgebildet, wobei sich ein Ende des zweiten Federabschnittes der Federanordnung gegen die Grundfläche der Sacklochbohrung abstützt.

Nach einer besonders vorteilhaften Ausgestaltung der Erfindung ist das Federwegbegrenzungsmittel als Federteller ausgebildet, an welchem sich der erste Federabschnitt auf einer Seite des Federtellers und der zweite Federabschnitt auf der anderen Seite des Federtellers abstützen.

Dabei ist ein solcher Federteller weiterbildungsgemäß mit einem Wegbegrenzungsflansch ausgebildet, welcher eine axiale Länge aufweist, derart dass in der Zwischenstellung des Ventilschiebers unter Begrenzung des Federweges des zweiten Federabschnittes die freie Stirnfläche des Wegbegrenzungsflansches am Polkern anliegt. Die Bestromung der Magnetspule mit mittlerer Stromstärke erzeugt eine Magnetkraft, welche den Ventilschieber gegen die Federkraft der Federanordnung in Richtung des Polkerns verschiebt, wobei zunächst nur die Federkraft des zweiten Federabschnittes (weiche Feder) die Gegenkraft aufbringt, bis der mit dem sich verkürzende zweite Federabschnitt sich mitbewegende Federteller durch Anschlagen von dessen Wegbegrenzungsflansch an dem Polkern geblockt wird und damit eine weitere Verkürzung des Federweges nicht mehr möglich ist. Damit hat der Ventilschieber seine Zwischenstellung erreicht.

Wird anschließend durch Erhöhung der Bestromungstärke die Magnetkraft auf den Ventilschieber weiter erhöht, steigt auch die Federkraft entsprechend der nun folgenden steilen Kennlinie des ersten Federabschnittes an, bis der Ventilschieber durch Anschlagen an den Polkern seine zweite Grundstellung erreicht.

Hinsichtlich der Federanordnung sieht eine Weiterbildung der Erfindung vor, dass der erste und zweite Federabschnitt der Federanordnung jeweils als erstes und zweites Federelement, vorzugsweise jeweils als Druckfeder bzw. als Schraubenfeder ausgebildet sind. So kann die Federanordnung einerseits als Feder mit zwei Federabschnitten realisiert werden, wobei diese Federabschnitte unterschiedliche Windungsabstände aufweisen und andererseits mit zwei getrennten Federelementen, die über den Federteller miteinander verbunden werden.

Besonders vorteilhaft ist es, wenn der Wegbegrenzungsflansch des Federtellers zur Führung des zweiten Federabschnittes bzw. des zweiten Federelementes an dessen Innenkontur angepasst ist. Entsprechend ist es auch vorteilhaft, wenn weiterbildungsgemäß der Federteller zur Führung des ersten Federabschnittes bzw. des ersten Federelementes einen Führungsflansch aufweist, der an die Innenkontur des ersten Federelementes angepasst ist.

Insgesamt ergibt sich damit ein einfacher konstruktiver Aufbau zur sicheren Führung der Federanordnung.

Weiterhin weist gemäß einer Ausgestaltung der Erfindung das Ventilgehäuse einen Ventilkörper mit einem axialen Schieberkanal zur Führung des Ventilschiebers auf, wobei an einem stirnseitigen Ende die wenigstens eine radiale Durchtrittsöffnung angeordnet ist.

Ferner weist das Ventilgehäuse wenigstens eine mit der Durchtrittsöffnung korrespondierende radiale Zulauföffnung auf. Die zugehörige axiale Ablauföffnung ist mit dem hohlzylindrischen Schieberabschnitt korrespondierend ebenso in dem Ventilgehäuse ausgebildet.

Die Erfindung wird nachfolgend anhand eines Ausführungsbeispiels unter Bezugnahme auf die beigefügten Figuren ausführlich beschrieben. Es zeigen:
- Figur 1: eine schematische Schnittdarstellung eines elektromagnetischen Ventils als Ausführungsform der Erfindung mit einem Ventilschieber in der ersten Grundstellung,
- Figur 2: eine schematische Schnittdarstellung des elektromagnetischen Ventils gemäß Figur 1, bei welchem der Ventilschieber sich in einer Zwischenstellung befindet,
- Figur 3: eine schematische Schnittdarstellung des elektromagnetischen Ventils gemäß Figur 1, bei welchem der Ventilschieber sich in einer zweiten Grundstellung befindet, und
- Figur 4: ein Diagramm mit Feder-Magnetkraftkennlinien zur Erläuterung der Funktionsweise des elektromagnetischen Ventils gemäß den Figuren 1 bis 3.

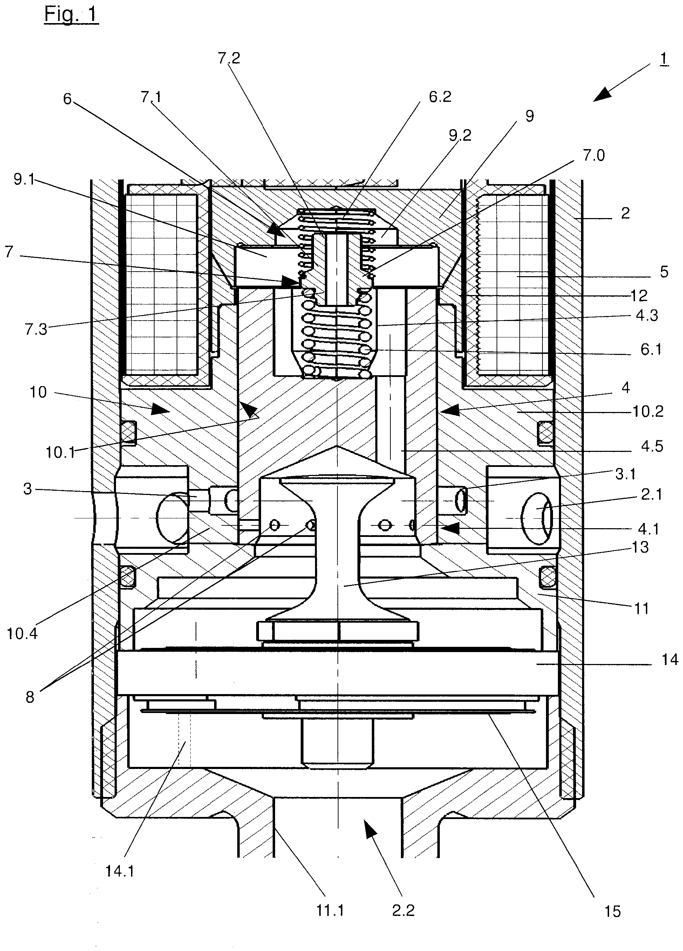

In den Figuren 1, 2 und 3 ist jeweils das identische elektromagnetische Ventil 1 dargestellt, wobei sich die Darstellungen lediglich durch unterschiedliche Positionen eines Ventilschiebers 4 unterscheiden, die auf verschiedene Bestromungszustände einer Magnetspule 5 zurückzuführen sind.

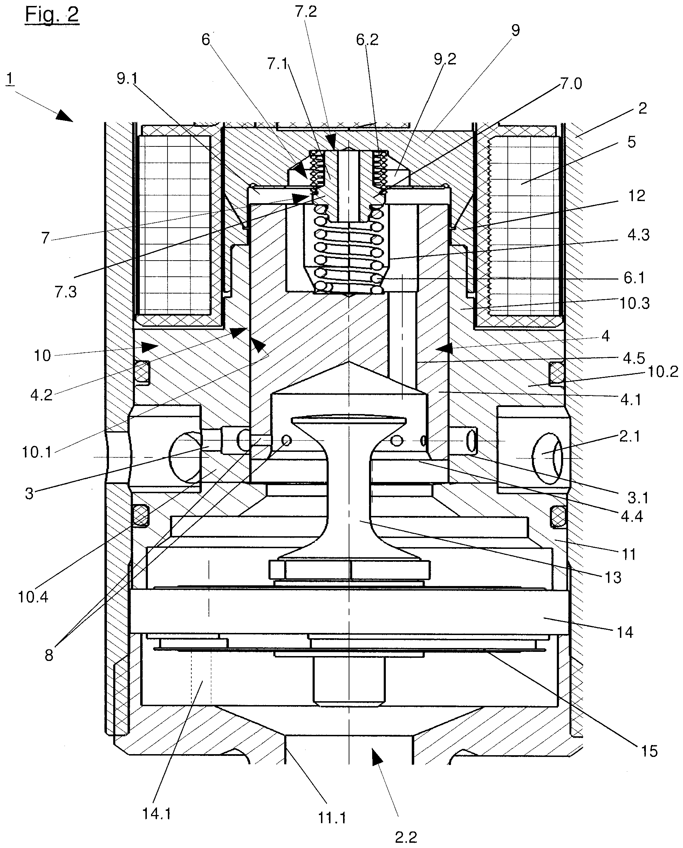

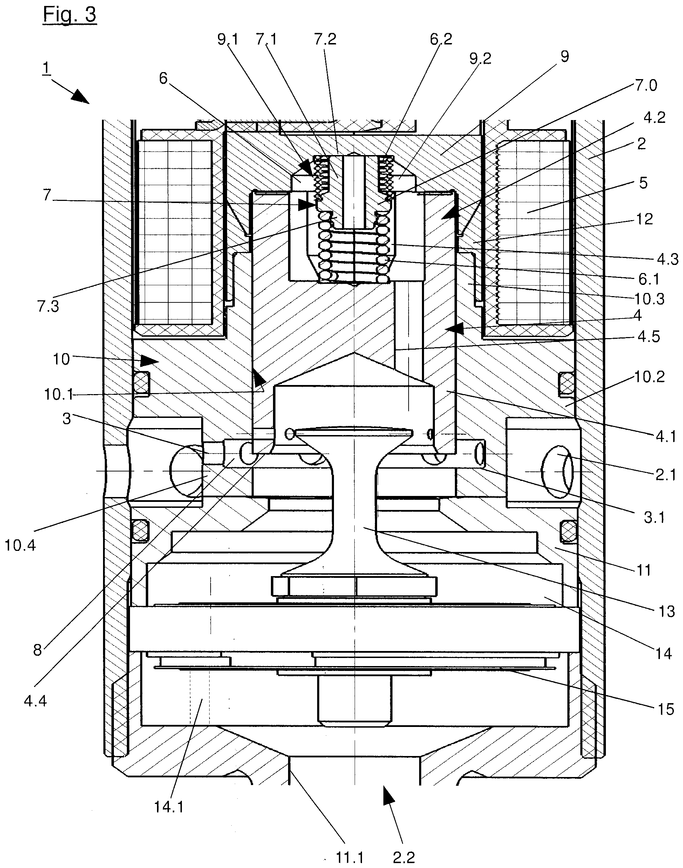

Dieses elektromagnetische Ventil 1 dient zur Verstellung der Dämpfercharakteristik eines Dämpfersystems für Kraftfahrzeuge und ist dreistufig ausgebildet, so dass drei sich unterscheidende Dämpfercharakteristiken in Abhängigkeit der Stellung des Ventilschiebers 4 eingestellt werden können. So werden neben einer ersten Grundstellung I (vgl. Figur 1), bei welcher mit unbestromter Magnetspule 5 die den Durchfluss eines Druckmediums ermöglichenden Durchtrittsöffnungen 3 geschlossen sind, und einer zweiten Grundstellung II (vgl. Figur 3), bei welcher mit maximaler Bestromung der Magnetspule 5 ein ungehinderter Durchfluss des Druckmediums erfolgt, eine dritte Stellung mit einer Teilbestromung der Magnetspule 5, eine sogenannte Zwischenstellung III (vgl. Figur 2) des Ventilschiebers 4 realisiert, bei welcher der Durchfluss des Druckmediums durch die Durchtrittsöffnungen 3 gedrosselt ist.

Das in den Figuren 1, 2 und 3 dargestellte elektromagnetische Ventil 1 umfasst ein becherförmiges Ventilgehäuse 2, welches einen Ventilkörper 10, einen Polkern 9, die Magnetspule 5 und ein becherförmiges Abschlussteil 11 aufnimmt. Der Ventilkörper 10 ist mit einem zentrischen Schieberkanal 10.1 zur axialverschieblichen Aufnahme des Ventilschiebers 4 ausgebildet und stellt auf der zum Polkern 9 abgewandten Stirnseite eine Verbindung zum Abschlussteil 11 her, welches seinerseits eine Ablauföffnung 2.2 des Ventils 1 aufweist.

Der Ventilkörper 10 setzt sich aus einem mittleren Abschnitt 10.2, einem gegenüber dem mittleren Abschnitt 10.2 abgesetzten ringförmigen Abschnitt 10.3, der über einen Verbindungsring 12 mit dem Polkern 9 flächenschlüssig verbunden ist, und einem dem ringförmigen Abschnitt 10.3 gegenüberliegenden weiteren, gegenüber dem mittleren Abschnitt 10.2 ebenso abgesetzten ringförmigen Abschnitt 10.4 zusammen, wobei dieser weitere ringförmige Abschnitt 10.4 auf dem Umfang verteilte radial verlaufende Durchtrittsöffnungen 3 aufweist. Diese Durchtrittsöffnungen 3 sind über eine auf der Umfangsfläche des Schieberkanals 10.1 radial umlaufende Ringnut 3.1 verbunden. Ferner sind die Durchtrittsöffnungen 3 mit entsprechenden Zulauföffnungen 2.1 in dem Ventilgehäuse 2 verbunden, die über eine auf der Umfangsfläche des ringförmigen Abschnittes 10.3 zusammen mit dem Gehäuse 2 und dem Abschlussteil 11 gebildete radial umlaufende Ringnut kommunizieren.

Zur Bildung eines stirnseitigen Abschlusses des Schieberventils 4 liegt an der Stirnseite des ringförmigen Abschnittes 10.4 des Ventilkörpers 10 das Abschlussteil 11 an, welches stirnseitig eine axiale Öffnung 11.1 zur Bildung der Ablauföffnung 2.2 aufweist. Die ventilschieberseitige Stirnseite des Abschlussteils 11 bildet den Anschlag für den Ventilschieber 4 zur Definition von dessen ersten Grundstellung I bei unbestromter Magnetspule 5.

Der mittlere Abschnitt 10.2 des Ventilkörpers 10 wird formschlüssig von dem Ventilgehäuse 2 umschlossen, wobei in einer Ringnut ein Dichtring den Ventilraum abdichtet.

Der Ventilkörper 10, der Verbindungsring 12 sowie der als Sacklochbohrung ausgebildete Ankerraum 9.1 des Polkerns 9 sind derart ausgebildet, dass der Schieberkanal 10.1 mit dem Verbindungsring 12 und dem Ankerraum 9.1 einen einheitlichen zylindrischen Raum bildet, so dass der Ventilschieber 4 entlang dieses zylindrischen Raums, also aus der in Figur 1 dargestellten ersten Grundstellung I bis in die in Figur 3 dargestellte zweite Grundstellung II verschiebbar ist, in der der Ventilschieber 4 in den Ankerraum 9.1 eintaucht und am Polkern 9 anschlägt.

Der Ventilschieber 4 weist eine an den zylindrischen Schieberkanal 10.1 angepasste zylindrische Form auf und umfasst einen hohlzylindrischen Schieberabschnitt 4.1 und einen sich daran anschließenden Ankerabschnitt 4.2. Der Innenraum des hohlzylindrischen Schieberabschnittes 4.1 ist als Sacklochbohrung ausgeführt, an die sich der Ankerabschnitt 4.2 anschließt, so dass sowohl die hydraulische Funktion eines Schieberelementes als auch die magnetische Funktion eines Ankerteils in einem einzigen Bauteil, dem Ventilschieber 4 integriert ist.

Im unbestromten Zustand der Magnetspule 5 wird der Ventilschieber 4 mittels einer Federanordnung 6, welche zwischen dem Ventilschieber 4 und dem Polkern 9 angeordnet ist, von dieser Federanordnung 6 vorgespannt in der ersten Grundstellung I gemäß Figur 1 gehalten. In dieser Grundstellung I liegt der Ventilschieber 4 an dem Abschlussteil 11 an, so dass die Durchtrittsöffnungen 3 einschließlich der Ringnut 3.1 in dem ringförmigen Abschnitt 10.4 des Ventilkörpers 10 von dem hohlzylindrischen Schieberabschnitt 4.1 des Ventilschiebers 4 verschlossen werden.

Ferner weist der Schieberabschnitt 4.1 des Ventilschiebers 4 mehrere auf dessen Umfang angeordnete radial verlaufende Blendenöffnungen 8 auf, die den Innenraum des hohlzylindrischen Schieberabschnittes 4.1 mit dem Außenraum des Ventilschiebers 4 verbinden. Diese Blendenöffnungen 8 sind gegenüber der freien Stirnfläche des Schieberabschnittes 4.1 mit nur einem geringen axialen Versatz in der Zylinderwand des hohlzylindrischen Schieberabschnittes 4.1 eingebracht, so dass in der ersten Grundstellung I des Ventilschiebers 4 gemäß Figur 1 diese Blendenöffnungen 11 sich nicht mit den Durchtrittsöffnungen 3 bzw. mit der diese Durchtrittsöffnungen 3 verbindenden Ringnut 3.1 überdecken können.

Eine Bestromung der Magnetspule 5 mit einer vorgegebenen Stromstärke führt bekanntermaßen zur Erzeugung eines Magnetfeldes, welches den Ventilschieber 4 gegen die Federkraft der Federanordnung 6 in Richtung des Polkerns 9 verschiebt, bis die Federkraft der Federanordnung 6 mit der Magnetkraft des Magnetfeldes im Gleichgewicht ist.

Die Federanordnung 6 besteht aus zwei Federabschnitten 6.1 und 6.2, die seriell mittels eines Federtellers 7 verbunden sind, wobei dieser Federteller 7 auch als Federwegbegrenzungsmittel des zweiten Federabschnittes 6.2 wirkt. Der erste Federabschnitt 6.1 wird Wesentlichen von einem Hohlzylinder 4.3 des Ankerabschnittes 4.2 aufgenommen und stützt sich auf der Grundfläche dieses Hohlzylinders 4.3 ab, wobei der Durchmesser dieses Hohlzylinders 4.3 zur Führung des ersten Federelementes 6.1 an dessen radialen Durchmesser angepasst ist. Das freie Ende des zweiten Federabschnittes 6.2 stützt sich gegen eine Sacklochbohrung 9.2 des Polkerns 9 ab.

Der erste Federabschnitt 6.1 und der zweite Federabschnitt 6.2 bestehen jeweils aus einer Schraubendruckfeder als erstes bzw. zweites Federelement. Das zweite Federelement 6.2 ist gegenüber dem ersten Federelement 6.1 mit einer kleineren Federkonstante ausgebildet, so dass das erste Federelementes eine harte Feder darstellt, gegenüber dieser das zweite Federelement eine weiche Feder ist.

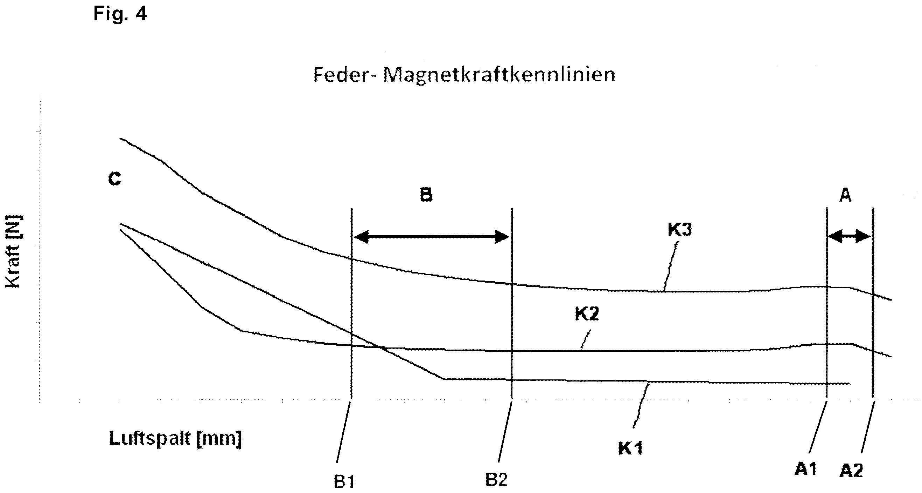

Damit ergibt sich eine Federkennlinie K1 gemäß Figur 4, deren Federkraftverlauf in Abhängigkeit des Luftspaltes zwischen dem Ventilschieber 4 und dem Polkern 9 dargestellt ist, wobei ausgehend von der Grundstellung I gemäß Figur 1 die Änderung der Luftspaltweite dem Ventilhub des Ventilschiebers 4 entspricht. Entsprechend der Grundstellung I beginnt daher die Federkennlinie K1 mit dem größten Wert des Luftspaltes, wobei ein Toleranzfeld A mit einer minimalen und einer maximalen Toleranz A1 und A2 diese Grundstellung I kennzeichnet.

Gemäß Figur 4 stellt diese Federkennlinie K1 eine geknickte Kennlinie dar, die sich aus einem von dem zweiten, also dem weichen Federelement 6.2 erzeugten im Wesentlichen waagerechten und geradlinigen Ast und einem sich daran anschließenden steilen und ebenso geradlinigen Ast besteht, wobei der steile Ast von dem ersten, also steifen Federelement 6.1 erzeugt wird.

Der Knickpunkt K dieser Federkennlinie K1 entsteht dadurch, dass das zweite Federelement 6.2 in seinem Federweg bei Erreichen einer in Figur 2 dargestellten Zwischenstellung III mittels des Federwegbegrenzungsmittels 7 begrenzt wird.

Der Federteller 7 als Federwegbegrenzungsmittel umfasst das eigentliche Federtellerelement 7.0, an dem sich ankerseitig das erste Federelement 6.1 und polkernseitig das zweite Federelement 6.2 abstützen. Ferner weist der Federteller 7 einen Führungsflansch 7.3 auf, welcher zur Führung des ersten Federelementes 6.1 in dasselbe ragt. Ferner ist ein Wegbegrenzungsflansch 7.1 vorgesehen, der in das zweite Federelement 6.2 ragt und gleichzeitig sowohl zur Führung als auch zur Federwegbegrenzung desselben dient.

Die Federwegbegrenzung kommt dadurch zu Stande, dass bei einer durch ein Magnetfeld der bestromten Magnetspule 5 verursachten Bewegung des Ventilschiebers 4 in Richtung des Polkernes 9 aufgrund der kleineren Federkonstante des zweiten Federelementes 6.2 zunächst diese die Federkraft gegen die Bewegung des Ventilschiebers 4 erzeugt und zusammengedrückt wird, ohne dass dabei das erste Federelement 6.1 dabei wesentlich seine Länge ändert. Damit bewegt sich mit der Bewegung des Ventilschiebers 4 auch das Federwegbegrenzungsmittel 7 in Richtung des Polkerns 9, bis eine freie Stirnfläche 7.2 des Wegbegrenzungsflansches 7.1 an der Grundfläche der Sacklochbohrung 9.2 des Polkerns 9 anliegt, wodurch der Knickpunkt K definiert wird. Bei einer weiteren Bewegung des Ventilschiebers 4 in Richtung des Polkerns 9 würde das erste Federelement 6.1 jetzt eine zusätzliche Federkraft erzeugen, so dass bei weiterer Bewegung des Ventilschiebers 4 in Richtung des Polkerns 9 die Federkraft entsprechend des steilen Astes der Federkennlinie K1 nach Figur 4 zunehmen würde.

Um den Ventilschieber 4 in die Zwischenstellung III gemäß Figur 2 zu steuern, wird die Magnetspule 5 mit einem Strom einer ersten Stromstärke teilbestromt, so dass die in dem Diagramm gemäß Figur 4 dargestellte Magnetkraftkennlinie K2 erzeugt wird, die den steilen Ast der Federkraftkennlinie K1 in dem Toleranzfeld B, welches durch eine minimale Toleranz B1 und eine maximale Toleranz B2 definiert ist, schneidet. In diesem Schnittpunkt der beiden Kennlinien K1 und K2 kompensieren sich die Federkraft und die Magnetkraft, so dass der Ventilschieber 4 in dieser Situation eine stabile Lage einnimmt.

In dieser Lage des Ventilschiebers 4 gemäß Figur 2 überdecken sich die Blendenöffnungen 8 und die Durchtrittsöffnungen 3 bzw. die Ringnut 3.1, so dass ein durch den Querschnitt der Blendenöffnungen 3 definierter gedrosselter Querschnitt entsteht, durch den das Druckmedium geleitet wird.

Wird dagegen die Magnetspule 5 mit einem höheren Strom mit einer zweiten Stromstärke maximal bestromt, wird eine Magnetkraftkennlinie K3 gemäß Figur 4 erzeugt, die keinen Schnittpunkt mit der Federkraftkennlinie K1 bildet. Dies hat zur Folge, dass der Ventilschieber 4 über die Zwischenstellung III hinaus von dem Polkern 9 angezogen wird, bis die polkernseitig Stirnfläche des Ankerabschnittes 4.2 am Polkern 9 anliegt. Damit hat der Ventilschieber 4 eine zweite Grundstellung II erreicht, wobei dieser Bereich in dem Diagramm gemäß Figur 4 mit C bezeichnet ist.

In dieser zweiten Grundstellung II sind die Blendenöffnungen 8 nicht mehr mit den Durchtrittsöffnungen 3 und der diese miteinander verbindende Ringnut 3.1 verbunden, sondern werden von der inneren Mantelfläche des ringförmigen Abschnittes 10.4 abgedeckt. Die Blendenöffnung 8 muss jedoch nicht geschlossen sein. Für die Strömungskräfte ist es sogar von Vorteil, wenn die Blendenöffnung 8 in der zweiten Grundstellung (bestromt) noch teilweise offen ist. Jedoch werden von einer Steuerkante 4.4 des Schieberabschnittes 4.1, die von der Stirnfläche dieses Schieberabschnittes 4.1 gebildet wird, die Durchtrittsöffnungen 3 und die diese Durchtrittsöffnungen 3 verbindende Ringnut 3.1 freigegeben, so dass der volle Querschnitt der Durchtrittsöffnungen 3 wirksam wird.

Damit kann das Druckmedium über die Zulauföffnungen 2.1 und die Blendenöffnungen 8 in den Schieberkanal 10.1 und von dort über das Abschlussteil 11 in die Ablauföffnung 2.2 abfließen.

In dem Abschlussteil 11 ist zentrisch ein hantelförmiges Stromführungsteil 13 auf einer Ventilplatte 14 angeordnet, das die Strömung des Druckmediums in Richtung der Ablauföffnung 2.2 lenken soll. Die Ventilplatte 14 weist ablaufseitig eine Blattfeder 15 auf, die über Drucköffnungen 14.1 vom Druckmedium druckbeaufschlagt wird, so dass diese Blattfeder 10 abhebt und das Druckmedium über die Ablauföffnung 2.2 ablaufen kann.

In dem Ankerabschnitt 4.2 des Ventilschiebers 4 sind mehrere Druckausgleichskanäle 4.5 vorgesehen, die den Hohlraum des Schieberabschnittes 4.1 mit der polseitigen Stirnseite des Ankerabschnittes 4.2 verbinden. Dadurch wird ein Druckausgleich zwischen dem Hohlraum des Schieberabschnittes 4.1 und dem Ankerraum 9.1 geschaffen.

### Bezugszeichenliste

- 1: Elektromagnetisches Ventil
- 2: Ventilgehäuse
- 2.1: Zulauföffnung des Ventilgehäuses 2
- 2.2: Ablauföffnung des Ventils Gehäuses 2
- 3: Durchtrittsöffnung
- 3.1: Ringnut
- 4: Ventilschieber
- 4.1: Schieberabschnitt des Ventilschiebers 4
- 4.2: Ankerabschnitt des Ventilschiebers 4
- 4.3: Hohlzylinder des Ankerabschnittes 4.2
- 4.4: Steuerkante des Schieberabschnittes 4.1
- 4.5: Druckausgleichskanal des Ankerabschnittes 4.2
- 5: Magnetspule
- 6: Federanordnung
- 6.1: erster Federabschnitt, erstes Federelement
- 6.2: zweiter Federabschnitt, zweites Federelement
- 7: Federwegbegrenzungsmittel, Federteller
- 7.0: Federtellerelement des Federtellers 7
- 7.1: Wegbegrenzungsflansch des Federtellers 7
- 7.2: freie Stirnfläche des Wegbegrenzungsflansches 7.1
- 7.3: Führungsflansch des Federtellers 7
- 8: Blendenöffnung des Schieberabschnittes 4.1
- 9: Polkern
- 9.1: Ankerraum
- 9.2: Sacklochbohrung

- 10: Ventilkörper
- 10.1: Schieberkanal des Ventilkörpers 10
- 10.2: mittleren Abschnitt des Ventilkörpers 10
- 10.3: ringförmiger Abschnitt des Ventilkörpers 10
- 10.4: ringförmiger Abschnitt des Ventilkörpers 10
- 11: Abschlussteil
- 11.1: stirnseitige Öffnung des Abschlussteils 11
- 12: Verbindungsring
- 13: Stromführungsteil
- 14: Ventilplatte
- 14.1: Drucköffnungen
- 15: Blattfeder

## Patentansprüche

1. Elektromagnetisches Ventil (1) zur Durchflusssteuerung eines Druckmediums, umfassend
- ein Ventilgehäuse (2) mit einer Zulauföffnung (2.1) und einer Ablauföffnung (2.2) für das Druckmedium,
- mindestens eine die Zulauföffnung (2.1) mit der Ablauföffnung (2.2) verbindende Durchtrittsöffnung (3) für das Druckmedium,
- einen Ventilschieber (4), welcher mittels einer Magnetspule (5) zwischen einer die Durchtrittsöffnung (3) verschließenden ersten Grundstellung (I) und einer die Durchtrittsöffnung (3) öffnenden zweiten Grundstellung (II) axial verschiebbar ist,
- einen mit dem Ventilschieber (4) in magnetische Wechselwirkung tretenden Polkern (9) mit einem Ankerraum (9.1), und
- eine Federanordnung (6), welche bei unbestromter Magnetspule (5) den Ventilschieber (4) in der ersten oder der zweiten Grundposition (I, II) positioniert,
- wobei die Federanordnung (6) einen ersten Federabschnitt (6.1) und einen mit diesem seriell verbundenen zweiten Federabschnitt (6.2 umfasst, wobei der zweite Federabschnitt (6.2) eine kleinere Federkonstante als der erste Federabschnitt (6.1) aufweist,
- wobei ein Federwegbegrenzungsmittel (7) vorgesehen ist, welches zur Positionierung des Ventilschiebers (4) in einer Zwischenstellung (III) zwischen der ersten und zweiten Grundstellung (I, II) mittels der bestromten Magnetspule (5) einen vorgegebenen Federweg des zweiten Federabschnittes (6.2) durch Anlage an den Polkern (9) begrenzt,
- wobei der Ventilschieber (4) als Anker mit einem hohlzylindrischen Schieberabschnitt (4.1) ausgebildet ist, wobei der Schieberabschnitt (4.1) wenigstens eine radiale Blendenöffnung (8) aufweist, und
- der Ventilschieber (4) ausgebildet ist, in der Zwischenstellung (III) wenigstens einen Teilquerschnitt der Durchtrittsöffnung (3) freizugeben,
**dadurch gekennzeichnet, dass**
sich in der Zwischenstellung (III) des Ventilschiebers (4) die Durchtrittsöffnung (3) wenigstens teilweise mit der Blendenöffnung (8) überdeckt.

2. Elektromagnetisches Ventil (1) nach Anspruch 1,
**dadurch gekennzeichnet, dass** der Ventilschieber (4) einen zum hohlzylindrischen Schieberabschnitt (4.1) endseitig gegenüberliegenden Ankerabschnitt (4.2) aufweist.

3. Elektromagnetisches Ventil (1) nach einem der vorhergehenden Ansprüche,
**dadurch gekennzeichnet, dass**
- die Federanordnung (6) zwischen dem Polkern (9) und dem Ventilschieber (4) angeordnet ist, und
- der Ventilschieber (4) in entgegengesetzte Richtung der magnetischen Wechselwirkungskraft von der Federanordnung (6) vorgespannt ist.

4. Elektromagnetisches Ventil (1) nach Anspruch 3,
d**adurch gekennzeichnet**, dass der Ankerabschnitt (4.2) einen zylindrischen Hohlraum (4.3) aufweist, welcher zur wenigstens teilweisen Aufnahme des ersten Federabschnittes (6.1) an dessen radiale Kontur angepasst ist, wobei sich ein Ende des ersten Federabschnittes (6.1) gegen die Grundfläche der zylindrischen Hohlraums (4.3) des Ankerabschnittes (4.2) abstützt.

5. Elektromagnetisches Ventil (1) nach einem der Ansprüche 3 oder 4,
**dadurch gekennzeichnet, dass** der Polkern (9) mit einer Sacklochbohrung (9.2) ausgebildet ist, wobei sich ein Ende des zweiten Federabschnittes (6.2) der Federanordnung (6) gegen die Grundfläche der Sacklochbohrung (9.2) abstützt.

6. Elektromagnetisches Ventil (1) nach einem der vorhergehenden Ansprüche,
**dadurch gekennzeichnet, dass** das Federwegbegrenzungsmittel (7) als Federteller ausgebildet ist, an welchem sich der erste Federabschnitt (6.1) auf einer Seite des Federtellers (7) und der zweite Federabschnitt (6.2) auf der anderen Seite des Federtellers (7) abstützen.

7. Elektromagnetisches Ventil (1) nach Anspruch 6,
**dadurch gekennzeichnet, dass** der Federteller (7) mit einem Wegbegrenzungsflansch (7.1) ausgebildet ist, welcher eine axiale Länge aufweist, derart dass in der Zwischenstellung (III) des Ventilschiebers (4) unter Begrenzung des Federweges des zweiten Federabschnittes (6.2) die freie Stirnfläche (7.2) des Wegbegrenzungsflansches (7.1) am Polkern (9) anliegt.

8. Elektromagnetisches Ventil (1) nach einem der vorhergehenden Ansprüche,
**dadurch gekennzeichnet, dass** der erste und zweite Federabschnitt (6.1, 6.2) der Federanordnung (6) jeweils als erstes und zweites Federelement, vorzugsweise jeweils als Druckfeder ausgebildet sind.

9. Elektromagnetisches Ventil (1) nach Anspruch 7 oder 8,
**dadurch gekennzeichnet, dass** der Wegbegrenzungsflansch (7.1) des Federwegbegrenzungsmittels (7) zur Führung des zweiten Federabschnittes (6.2) an dessen Innenkontur angepasst ist.

10. Elektromagnetisches Ventil (1) nach einem der Ansprüche 6 bis 9,
**dadurch gekennzeichnet, dass** der Federteller (7) zur Führung des ersten Federabschnittes (6.1) einen Führungsflansch (7.3) aufweist, der an die Innenkontur des ersten Federabschnittes angepasst ist.

11. Elektromagnetisches Ventil (1) nach einem der vorhergehenden Ansprüche,
**dadurch gekennzeichnet, dass** das Ventilgehäuse (2) einen Ventilkörper (10) mit einem axialen Schieberkanal (10.1) zur Führung des Ventilschiebers (4) aufweist, wobei an einem stirnseitigen Ende die wenigstens eine radiale Durchtrittsöffnung (3) angeordnet ist.

12. Elektromagnetisches Ventil (1) nach einem der vorhergehenden Ansprüche,
**dadurch gekennzeichnet, dass** das Ventilgehäuse (2) wenigstens eine mit der Durchtrittsöffnung (3) korrespondierende radiale Zulauföffnung (2.1) aufweist.

13. Elektromagnetisches Ventil (1) nach einem der vorhergehenden Ansprüche,
**dadurch gekennzeichnet, dass** das Ventilgehäuse (2) eine mit dem hohlzylindrischen Schieberabschnitt (4.1) korrespondierende axiale Ablauföffnung (2.2) aufweist.

## Claims

1. Electromagnetic valve (1) for controlling the flow of a pressure medium, comprising
- a valve housing (2) with an inlet port (2.1) and an outlet port (2.2) for the pressure medium,
- at least one passage opening (3), which connects the inlet port (2.1) to the outlet port (2.2), for the pressure medium,
- a valve slide (4) that can be moved axially between a first basic position (I), which closes the passage opening (3), and a second basic position, which opens the passage opening (3), by means of a solenoid coil (5),
- a pole core (9), which enters into magnetic interaction with the valve slide (4), with an armature space (9.1), and
- a spring assembly (6), which positions the valve slide (4) in the first or the second basic position (I, II) when the solenoid coil (5) is not energized,
- wherein the spring assembly (6) comprises a first spring portion (6.1) and a second spring portion (6.2), which is connected in series to the first spring portion, wherein the second spring portion (6.2) has a smaller spring constant than the first spring portion (6.1),
- wherein a spring travel limiting means (7) is provided that limits a specified spring travel of the second spring portion (6.2) by resting against the pole core (9), in order to position the valve slide (4) in an intermediate position (III) between the first and second basic position (I, II) by means of the energized solenoid coil (5),
- wherein the valve slide (4) is designed as an armature with a hollow cylindrical slide portion (4.1), wherein the slide portion (4.1) has at least one radial aperture (8), and
- the valve slide (4) is designed to release at least a partial cross section of the passage opening (3) in the intermediate position (III),
**characterized in that**
the passage opening (3) covers at least partially the aperture (8) in the intermediate position (III) of the valve slide (4).

2. The electromagnetic valve (1) of claim 1,
**characterized in that**
the valve slide (4) has an armature portion (4.2) that is located opposite the hollow cylindrical slide portion (4.1) on the end side.

3. The electromagnetic valve (1) according to one of the previous claims,
**characterized in that**
- the spring assembly (6) is arranged between the pole core (9) and the valve slide (4), and
- the valve slide (4) is biased by the spring assembly (6) in the opposite direction of the magnetic interaction force.

4. The electromagnetic valve (1) of claim 3,
**characterized in that**
the armature portion (4.2) has a cylindrical cavity (4.3), which in order to at least partially accommodate the first spring portion (6.1) is adapted to its radial contour, wherein one end of the first spring portion (6.1) is supported by the base surface of the cylindrical cavity (4.3) of the armature portion (4.2).

5. The electromagnetic valve (1) of claim 3 or 4,
**characterized in that**
the pole core (9) is designed with a blind borehole (9.2), wherein one end of the second spring portion (6.2) of the spring assembly (6) is supported by the base surface of the blind borehole (9.2).

6. The electromagnetic valve (1) according to one of the previous claims,
**characterized in that**
the spring travel limiting means (7) is designed as a spring washer, by which the first spring portion (6.1) is supported on one side of the spring washer (7), and the second spring portion (6.2) is supported on the other side of the spring washer (7).

7. The electromagnetic valve (1) of claim 6,
**characterized in that**
the spring washer (7) is designed with a travel limiting flange (7.1), which has an axial length, in such a way that in the intermediate position (III) of the valve slide (4) the free end face (7.2) of the travel limiting flange (7.1) rests against the pole core (9) while limiting the spring travel of the second spring portion (6.2).

8. The electromagnetic valve (1) of claim 6,
**characterized in that**
the first and second spring portion (6.1, 6.2) of the spring assembly (6) are designed as the first and second spring element respectively, preferably in each instance as a compression spring.

9. The electromagnetic valve (1) of claim 7 or 8,
**characterized in that**
the travel limiting flange (7.1) of the spring travel limiting means (7) for guiding the second spring portion (6.2) is adapted to the inner contour thereof.

10. The electromagnetic valve (1) according to one of the previous claims,
**characterized in that**
the spring washer (7) for guiding the first spring portion (6.1) has a guide flange (7.3), which is adapted to the inner contour of the first spring portion.

11. The electromagnetic valve (1) according to one of the previous claims,
**characterized in that**
the valve housing (2) has a valve body (10) with an axial slide channel (10.1) for guiding the valve slide (4), wherein the at least one radial passage opening (3) is arranged on an end-sided end.

12. The electromagnetic valve (1) according to one of the previous claims,
**characterized in that**
the valve housing (2) has at least one radial inlet port (2.1) corresponding with the passage opening (3).

13. The electromagnetic valve (1) according to one of the previous claims,
**characterized in that**
the valve housing (2) has an axial outlet port (2.2) corresponding with the hollow cylindrical slide portion (4.1) .

## Revendications

1. Électrovanne (1) de réglage de débit d'un fluide sous pression, comprenant
- un boîtier de vanne (2) avec un orifice d'entrée (2.1) et un orifice de sortie (2.2) pour le fluide sous pression,
- au moins un orifice de passage (3) pour le fluide sous pression qui relie l'orifice d'entrée (2.1) à l'orifice de sortie (2.2),
- un tiroir de vanne (4), lequel est déplaçable axialement à l'aide d'une bobine magnétique (5) entre une première position de base (I) de fermeture de l'orifice de passage (3) et une seconde position de base (II) d'ouverture de l'orifice de passage (3),
- un noyau polaire (9) interagissant magnétiquement avec le tiroir de vanne (4) et ayant un espace d'armature (9.1), et
- un arrangement de ressort (6) qui positionne le tiroir de vanne (4) dans la première ou dans la seconde position de base (I, II) quand la bobine magnétique (5) n'est pas alimentée,
- dans laquelle l'arrangement de ressort (6) comprend une première portion de ressort (6.1) et une seconde portion de ressort (6.2) reliée en série à celle-ci, la seconde portion de ressort (6.2) ayant une constante de ressort plus petite que la première portion de ressort (6.1),
- dans laquelle un moyen de limitation de course de ressort (7) est prévu, lequel limite une course de ressort définie de la seconde portion de ressort (6.2) en s'appuyant sur le noyau polaire (9) afin de positionner le tiroir de vanne (4) dans une position intermédiaire (III) entre le première et la seconde position de base (I, II) à l'aide de la bobine magnétique (9) alimentée,
- dans laquelle le tiroir de vanne (4) est une armature avec une portion de tiroir (4.1) en forme de cylindre creux, la portion de tiroir (4.1) comprenant au moins une ouverture (8) radiale, et
- le tiroir de vanne (4) est formé de manière à libérer au moins une section partielle de l'orifice de passage (3) dans la position intermédiaire (III),
**caractérisée en ce que**
l'orifice de passage (3) recouvre au moins partiellement l'ouverture (8) dans la position intermédiaire (III) du tiroir de vanne (4) .

2. Électrovanne (1) selon la revendication 1,
**caractérisée en ce que**
le tiroir de vanne (4) comprend une portion d'armature (4.2) faisant face du côté de son extrémité à la portion de tiroir (4.1) en forme de cylindre creux.

3. Électrovanne (1) selon l'une des revendications précédentes,
**caractérisée en ce que**
- l'arrangement de ressort (6) est arrangé entre le noyau polaire (9) et le tiroir de vanne (4), et
- le tiroir de vanne (4) est précontraint par l'arrangement de ressort (6) dans une direction opposée à la force d'interaction magnétique.

4. Électrovanne (1) selon la revendication 3,
**caractérisée en ce que**
la portion d'armature (4.2) comprend une cavité cylindrique (4.3), laquelle, afin de recevoir au moins en partie la première portion de ressort (6.1), est adaptée à son contour radial, une extrémité de la première portion de ressort (6.1) s'appuyant contre la surface de base de la cavité cylindrique (4.3) de la portion d'armature (4.2) .

5. Électrovanne (1) selon l'une des revendications 3 ou 4,
**caractérisée en ce que**
le noyau polaire (9) est formé avec un trou borgne (9.2), une extrémité de la seconde portion de ressort (6.2) de l'arrangement de ressort (6) s'appuyant contre la surface de base du trou borgne (9.2).

6. Électrovanne (1) selon l'une des revendications précédentes,
**caractérisée en ce que**
le moyen de limitation de course de ressort (7) est formé comme une rondelle de ressort, sur laquelle s'appuient la première portion de ressort (6.1) sur un côté de la rondelle de ressort (7) et la seconde portion de ressort (6.2) sur l'autre côté de la rondelle de ressort (7).

7. Électrovanne (1) selon la revendication 6,
**caractérisée en ce que**
la rondelle de ressort (7) est formée avec une bride de limitation de course (7.1), laquelle comprend une longueur axiale, de telle façon que dans la position intermédiaire (III) du tiroir de vanne (4) en limitant la course de ressort de la seconde portion de ressort (6.2) la face frontale (7.2) libre de la bride de limitation de course (7.1) s'appuie sur le noyau polaire (9).

8. Électrovanne (1) selon l'une des revendications précédentes,
**caractérisée en ce que**
la première et la seconde portion de ressort (6.1, 6.2) de l'arrangement de ressort (6) sont chacune formées comme un premier et une second élément ressort, de préférence chacune comme un ressort de compression.

9. Électrovanne (1) selon l'une des revendications 7 ou 8,
**caractérisée en ce que**
la bride de limitation de course (7.1) du moyen de limitation de course de ressort (7) destinée au guidage de la seconde portion de ressort (6.2) est adaptée à son contour interne.

10. Électrovanne (1) selon l'une des revendications 6 à 9,
**caractérisée en ce que**
la rondelle de ressort (7) destinée au guidage de la première portion de ressort (6.1) comprend une bride de guidage (7.3) qui est adaptée au contour interne de la première portion de ressort.

11. Électrovanne (1) selon l'une des revendications précédentes,
**caractérisée en ce que**
le boîtier de vanne (2) comprend un corps de vanne (10) avec un canal de tiroir axial (10.1) destiné au guidage du tiroir de vanne (4), le ou les orifices de passage (3) étant disposés à une extrémité frontale.

12. Électrovanne (1) selon l'une des revendications précédentes,
**caractérisée en ce que**
le boîtier de vanne (2) comprend au moins un orifice d'entrée (2.1) radial correspondant avec l'orifice de passage (3).

13. Électrovanne (1) selon l'une des revendications précédentes,
**caractérisée en ce que**
le boîtier de vanne (2) comprend un orifice de sortie (2.2) axial correspondant avec la portion de tiroir (4.1) en forme de cylindre creux.
